# EUROPEAN PATENT SPECIFICATION

(11) **EP 2 626 619 B1**
(45) Date of publication and mention of the grant of the patent: **04.11.2020**
(21) Application number: 13154120.3
(22) Date of filing: 06.02.2013
(51) Int. Cl.: B64F 1/20, F21S 8/00, F21V 3/00, F21V 17/10, F21V 5/00, F21V 17/12, F21V 23/00, F21W 111/06, F21V 31/00

(54) **Surface mounting lamp**
Oberflächenmontierte Lampe
Lampe à montage en surface

(30) Priority: 08.02.2012 IT BO20120060; 19.10.2012 IT BO20120572
(43) Date of publication of application: 14.08.2013
(73) Proprietor: Calzoni S.r.l., 40012 Calderara di Reno BO (IT)
(72) Inventor: Bertin, Daniele Maria, 20139 MILANO (IT)
(74) Representative: Casadei, Giovanni

(56) References cited:
- EP-A2- 2 322 849
- WO-A2-2011/097425
- FR-A1- 2 690 468
- FR-A1- 2 697 617

## Description

This invention relates to a surface mounting lamp, that is, a lamp configured to be installed flush with a supporting surface.

The invention is applicable in particular in the field of aviation, particularly for lighting landing decks or helipads on both land and offshore platforms and on board ships.

In effect, these lamps are installed on a flat surface in such a way as to protrude just a little from the surface in order to provide a delimited illuminated indication along the surface which may be defined either by covered ground (tarmac or paving) or by slabs and metal frames (on board ships).

Current solutions for installation on the ground and even on landing decks involve making an opening in the lamp mounting (or installation) surface, where the lamp can be recessed and fixed in place.

In other words, a hole is made in the ground or ship deck to allow the body of the lamp to be recessed therein.

In some cases, it is also necessary to provide a sealed receptacle comprising within it the entire lighting element and the water passages and forming also a fire safety barrier.

Thus, prior art surface mounting lamps, especially when they require large emitting surfaces for purposes of visibility as mentioned above (for example, an illuminated line) involve making large openings in the mounting surface which in turn means not only high installation costs but also a significant impact on the structural continuity of the support. Typically, current lamps are made with a metal or plastic profile (or flange) running all the way round the lamp body and screwed in such a way as to hold the transparent cover.

Disadvantageously, that means the covers have to be particularly thick because they have to resist the high stress transmitted to them by the flange.

Moreover, the flange constitutes an opaque element round the lamp which prevents side lighting along the ground unless the lamp is raised relative to the flange, making the lamp even more protrusive.

**Prior art solutions are for example known from documents** WO2011/097425 **and** FR2697617**.**

The aim of this invention is to provide a surface mounting lamp that overcomes the above mentioned disadvantages of the prior art.

More specifically, it is an aim of this invention to provide a surface mounting lamp that is particularly slim and at the same time robust.

Another aim of the invention is to provide a surface mounting lamp that can provide side lighting along the surface the lamp is mounted on. Yet another aim of the invention is to provide a surface mounting lamp that is easy to make and quick to install.

These aims are fully achieved by the surface mounting lamp according to the invention as defined in claim 1. The surface mounting lamp comprising a covering element made of a transparent material (preferably PMMA) and having a first face which, in use, is directed outwards away from a mounting surface of the lamp, and a second face which is opposite the first face and which is provided with at least one socket for housing one or more lighting elements and at least one lighting unit equipped with a plurality of lighting elements, each housed in the socket.

The lamp of the invention also comprises at least one junction piece connected and sealed to the covering element and equipped with a connecting portion which can be engaged with a mounting surface of the lamp and comprising at least one stop abutment which is engageable with a fastening member to anchor the lamp to the mounting surface. It is to be noted that the lighting elements are located on the junction piece, each facing the inside of the socket and at least partly housed in it.

According to the invention, the lamp is provided with a layer of adhesive material interposed between the junction piece and the second face of the covering element holding the covering element on the junction piece, in order to reduce the mechanical stress on the covering element.

In other words, a pulling constraint is created between the junction piece and the covering element, (that is to say, a constraint which pulls the two parts together) to prevent them from coming apart.

Preferably, the retaining means are of a chemical type, that is, defined by a layer of adhesive material (for example, epoxy glue) or sealing material so as not to subject the structure of the covering element to mechanical stress.

In effect, the mechanical constraint is defined by the tightening means (screws or bolts) which operate between the junction piece and the lamp mounting surface in such a way as not to act on the covering element. Indeed, the tightening means can exert a much higher local stress on the covering element.

Advantageously, the lamp is thus particularly slim and robust.

These and other features of the invention will become more apparent from the following detailed description of a preferred, non-limiting embodiment of it, with reference to the accompanying drawings, in which:
- Figure 1, 1a, 1b and 1c show a perspective view, an exploded view, a section view and a detail of a first embodiment of a lamp according to the present invention;
- Figure 2 is an exploded view of a second embodiment of the lamp according to this invention;
- Figure 3 is a plan view of the lamp of Figure 2;
- Figures 4 and 4a show, respectively, a sectional view and a detail of the lamp of Figure 3 in a first embodiment of the covering element;
- Figures 5 and 5a show, respectively, a sectional view and a detail of the lamp of Figure 3 in a second embodiment of the covering element;
- Figure 6 is a schematic view of the second embodiment of the surface mounting lamp according to this invention;
- Figure 7 is an exploded view of the lamp according to this invention in a second alternative embodiment of it;

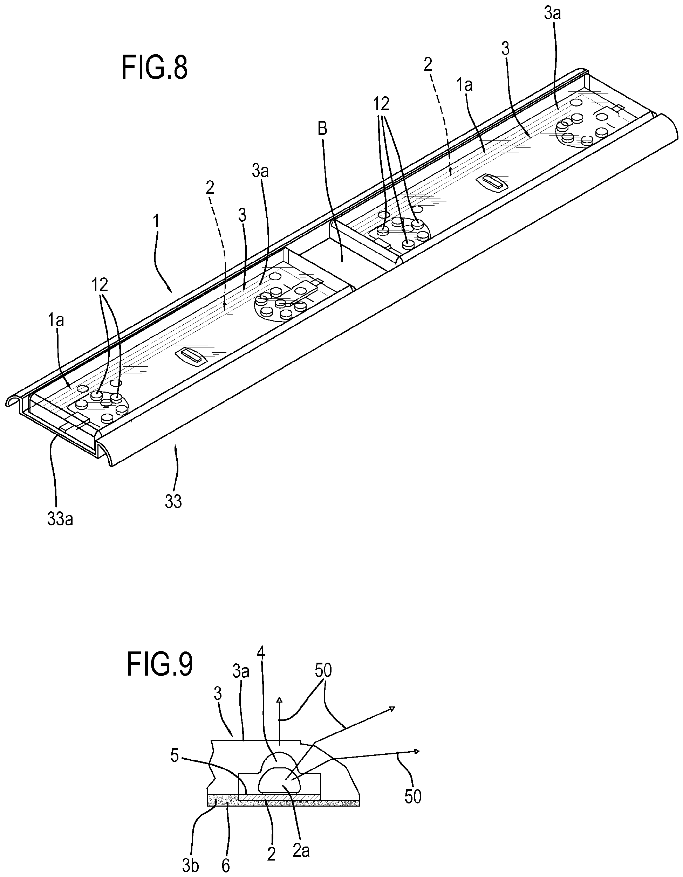

- Figure 8 is a perspective view of the lamp according to this invention in a third alternative embodiment of it;
- Figure 9 is a sectional view of a detail of the lamp according to the invention in order to highlight its lighting features.

With reference to the accompanying drawings, the numeral 1 denotes a surface mounting lamp according to this invention.

The term "surface mounting lamp" is used to mean a slim lamp adapted to be installed on a mounting surface "A", preferably flat, be it the ground (airport or heliport) or the deck of a ship.

As mentioned above, the purpose of the lamp 1 is to define an illuminated line along the mounting surface "A" to delimit an aircraft landing or take-off area and path.

This, in use, the lamp 1 lies on the ground and is directed upwards in such a way as to provide a reference point on the ground (or ship's deck). Thus, an important feature of the lamp 1 is that it must be able to support structures driven over it and hence must be resistant to high compression loads.

The lamp 1 comprises a lighting unit 2 and a covering element 3 made of a transparent material, preferably a polymethyl methacrylate (abbreviated PMMA) or of polycarbonate.

Polymethyl methacrylate is a plastic material composed of polymers of methyl methacrylate, the ester of methacrylic acid.

Chemically, it is the polymer of methyl methacrylate. It is also known by the trade names of Acrivill®, Deglas®, Limacryl®, Lucite®, Oroglas®, Perclax®, Perspex®, Plexiglas®, Pesartglass®, Vitroflex® and Trespex®. Preferably, the covering element 3 has a principally planar extension, that is to say, it presents two main directions where the extension of the element 3 is markedly greater than a third principal direction.

Thus, the covering element 3 is substantially a cap which may be flat or curved, depending on applications.

The covering element 3 has a first face 3a, which in use is directed outwards away from a mounting surface "A" of the lamp 1, and a second face 3b, opposite the first face 3a.

The second face 3b is provided with at least one socket 4 for housing at least part of the lighting unit 2, and more specifically, for housing a plurality of lighting elements 2a (better described below) forming part thereof.

The socket 4 thus defines a chamber for housing one or more lighting elements 2a of the lamp 1.

The lighting elements 2a are preferably of a substantially punctiform type. In the embodiment illustrated, the lighting elements 2a are LEDs (light emitting diodes) in their various forms, providing concentrated punctiform light or mounted on surface elements (COB, OLEDs or the like). Alternatively, however, the lighting elements might also be of another type such as, for example, electroluminescent panels (not illustrated). The lighting elements might also be optical modules (not illustrated) which diffuse light carried by optical fibres.

Preferably, moreover, the lighting unit 2 comprises a (printed) circuit 5 on which the lighting elements 2a are installed.

The circuit 5 is of the printed board type and comprises the electronic circuitry, including balancing resistors and/or electrical protection devices. Preferably, moreover, the circuit 5 comprises a connector (not illustrated) for electrical connection.

Thus, the lighting unit 2 is substantially a planar shaped element (for example a board) equipped with a plurality of lighting elements 2a arranged in a more or less regular manner along the surface of the circuit 5.

In the embodiment illustrated, for example, the light elements 2a (LEDs) are arranged in two rows along the edges of the circuit 5 (and of the lamp 1). Alternatively, however, the arrangement of the lighting elements 2a might be different, but without thereby departing from the scope of the invention as defined by the appended claims.

It should be noted that the LEDs may be installed either with main axis at a right angle to the mounting surface "A" (and thus to the plane defined by the circuit 5), or with axis parallel to the surface, in such a way as to improve the distribution of the sidelight.

In a first embodiment, the covering element 3 is provided with one or more sockets 4, each adapted to house two or more lighting elements 2a.

Thus, the covering element 3 is a substantially full element made in such a way as to define a plurality of sockets 4 or grooves in which the lighting elements 2a of the lighting unit 2 are housed.

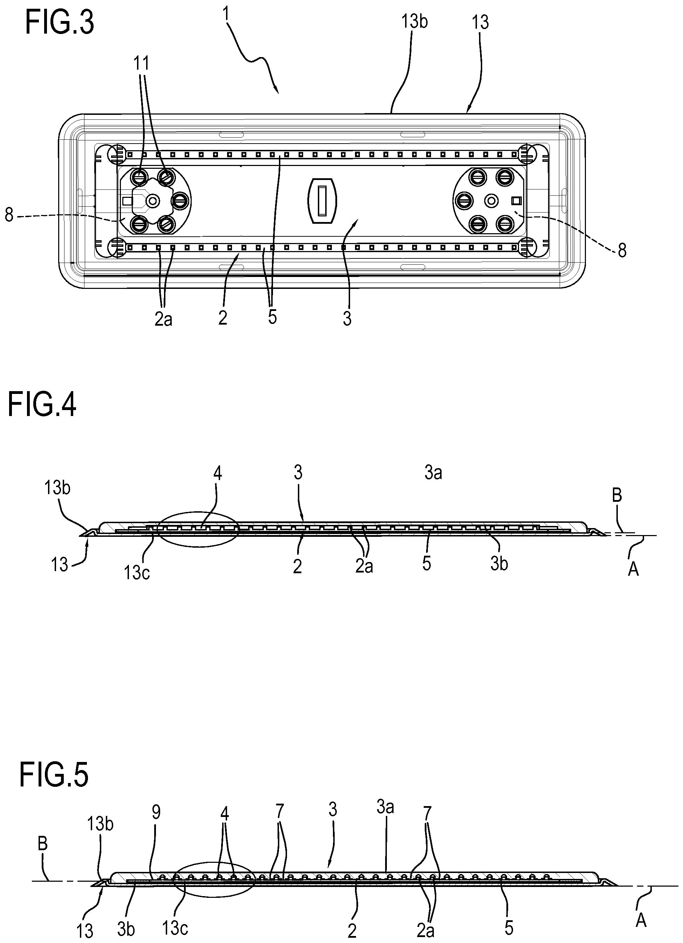

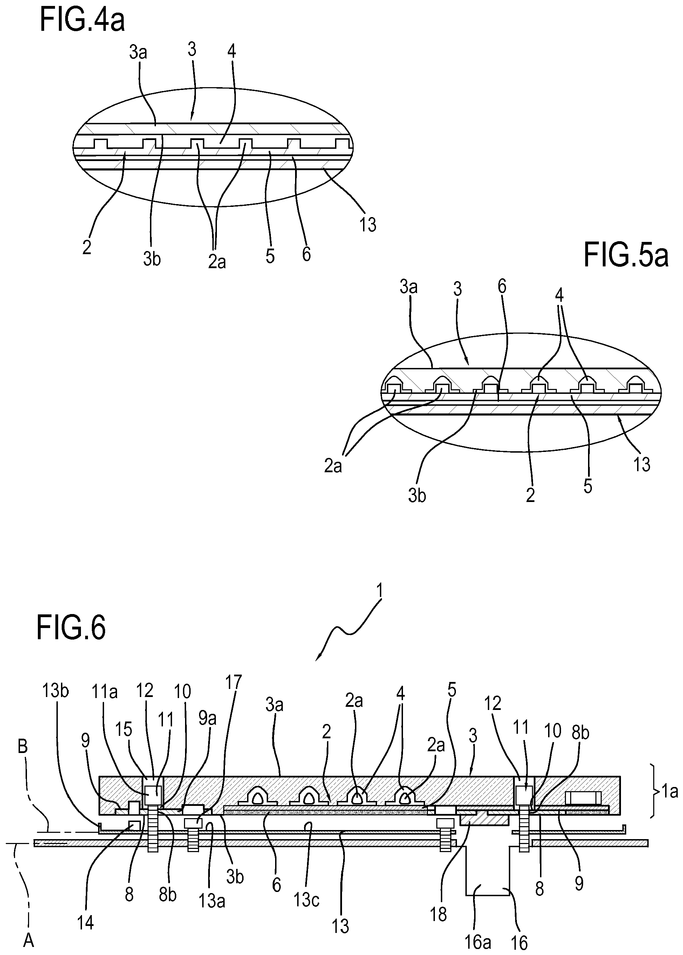

Advantageously, that way, the thickness of the lamp 1 is limited because the lighting elements 2a do not add their thickness to that of the covering element 3 but are embedded in the latter and housed in the sockets 4. With reference to Figures 4 and 4a, the covering element 3 presents a pair of sockets 4, or grooves of a size such as to accommodate all the lighting elements 2a under a single vault.

In this embodiment, the lighting unit 2 comprises two printed circuits which are electrically connected to each other to define a single body and each housed in a respective socket 4.

In a second embodiment, each socket 4 is adapted to house a single lighting element 2a.

With reference to Figures 5 and 5a, the covering element 3 presents a plurality of sockets 4 each being of a size such as to accommodate a single lighting element.

Thus, the covering element 3 is provided with a series of sockets arranged to mirror the lighting elements.

In the embodiment illustrated, each socket is larger in volume than the respective lighting element 2a.

Thus, there is an air volume between the lighting element 2a and the intrados of the socket 4.

Alternatively, however, each socket 4 might be exactly shaped to match the respective lighting element 2a.

In this embodiment, therefore, each lighting element 2a is recessed in the respective socket 4 and remains in contact with the intrados thereof. Thus, the covering element 3 and the lighting unit 2 substantially define a single block, without empty spaces.

This configuration is obtained preferably by incorporating the lighting unit 2 in the covering element during the moulding thereof or by welding the covering element 3 to a closure covering the lighting unit 2.

It is clear, therefore, that the covering element 3 is not suspended over the circuits 5 and lighting elements 2a, but is supported at numerous points 7 which oppose its bending even when the lamp 1, installed in the ground, is subjected to high compression loads (for example, under the weight of a vehicle/aircraft).

Thus, the shape and combination of the covering element 3 with the lighting unit 2 gives high compressive strength to the lamp 1.

Preferably, the surface of each socket 4 and of the first face 3a of the covering element 3 has a curvature such as to direct the light rays 50 from the lighting elements 2a according to a desired light distribution characteristic which may also include emitting light tangentially to the mounting surface "A" of the lamp 1.

The directing of the light rays is obtained by the effect of refraction on the two surfaces concerned. The first, air-to-material, is the surface of the socket 4. The second, material-to-air, is the outside surface 3a. This curvature is obtained using a machine tool process (for example, on CNC routers). Alternatively, the part may be moulded.

In other words, the sockets 4 of the covering element 3 are optical surfaces which can be used to distribute light intensity at the different emission angles.

The inside surface of the sockets 4 can also be treated with a layer of reflective material in order to reflect the light rays.

In this case, directing the light rays from the light source is accomplished by a sequence of reflection into the socket 4 and two effects of refraction out of the socket 4 and out of the outside surface 3a.

The lighting unit 2 is tightly sealed. More specifically, the lighting unit is connected to the covering element in such a way that it is tightly sealed. Thus, the lighting unit 2 is sealably connected, that is, sealed, to the covering element 3.

That means the covering element 3 serves both as a transparent cover and as a receptacle.

More precisely, the circuit 5 is sealed to the second face 3b of the covering element 3 by a layer of sealing material 6 or 21 spread on an exposed side 5d of the circuit 5

The term "exposed" means the side which is directed towards the outside of the covering element 3

Advantageously, this is an easy and effective way of guaranteeing that the lamp 1 is watertight without leaving to the installer the task of sealing it by correctly placing gaskets and tightening screws.

The aforementioned sealing material is preferably of a fluid type - for example, a resin - which adapts to the shape of and covers all the passages to the outside and, once dry, changes to a solid, elastic state.

In a preferred embodiment, the layer of sealing material 21 is made from the same material as the covering element 3 itself, namely, poly(methyl methacrylate), PMMA.

In other words, the layer of sealing material 21 is made from the same material as the covering element 3 which, once dry, is a single part comprising the printed circuit 5.

That means the covering element 3, made of PMMA, also comprises the bottom sealing layer.

Thus, the circuit 5 (with the LEDs) is embedded in the covering element 3. In this embodiment, the sockets 4 are shaped to match the lighting element 2a.

Thus, as already mentioned, the covering element 3 and the lighting unit 2 substantially define a single block, without empty spaces.

During production, both the circuit 5 and the lighting elements 2a are embedded in the moulding of the transparent covering element 3.

In this embodiment, the covering element 3 adheres completely to the circuit 5 and therefore does not, in this case, have an air volume inside the sockets 4.

To connect the covering element 3 (and the lighting unit) to the mounting surface "A", the lamp 1 comprises at least one junction piece 8 connected to the covering element 3 and equipped with a connecting portion 8a which can be engaged with the mounting surface "A" of the lamp 1 in order to fix the position thereof.

The lamp 1 may comprise a single junction piece 8 or more than one junction piece, depending on the size of the lamp and on how many connecting points are needed to keep it securely fixed.

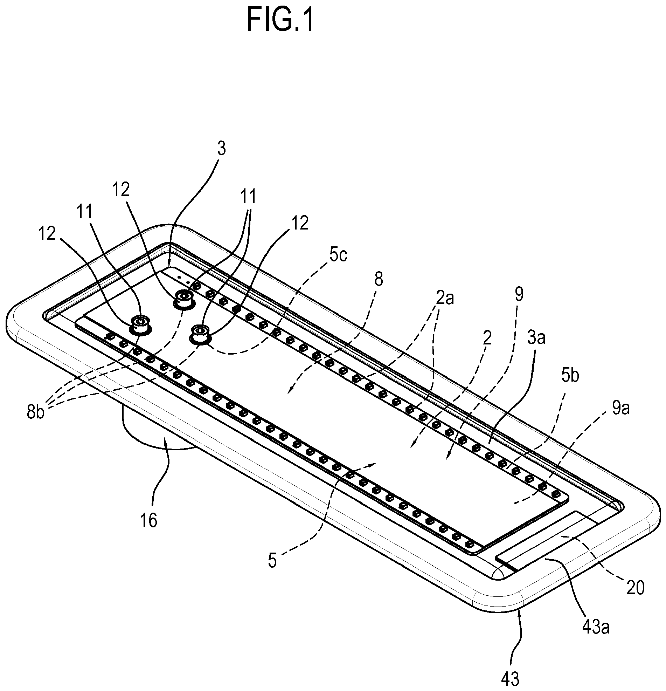

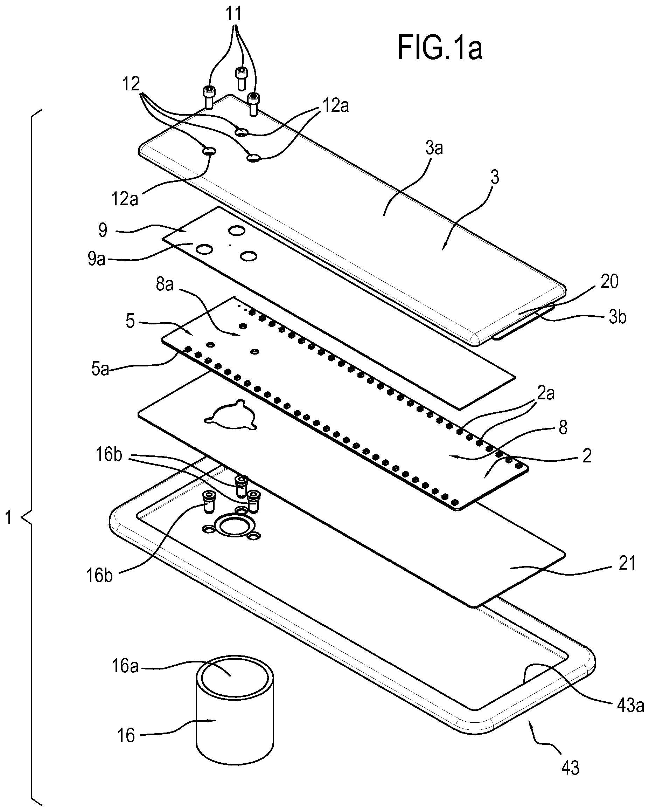

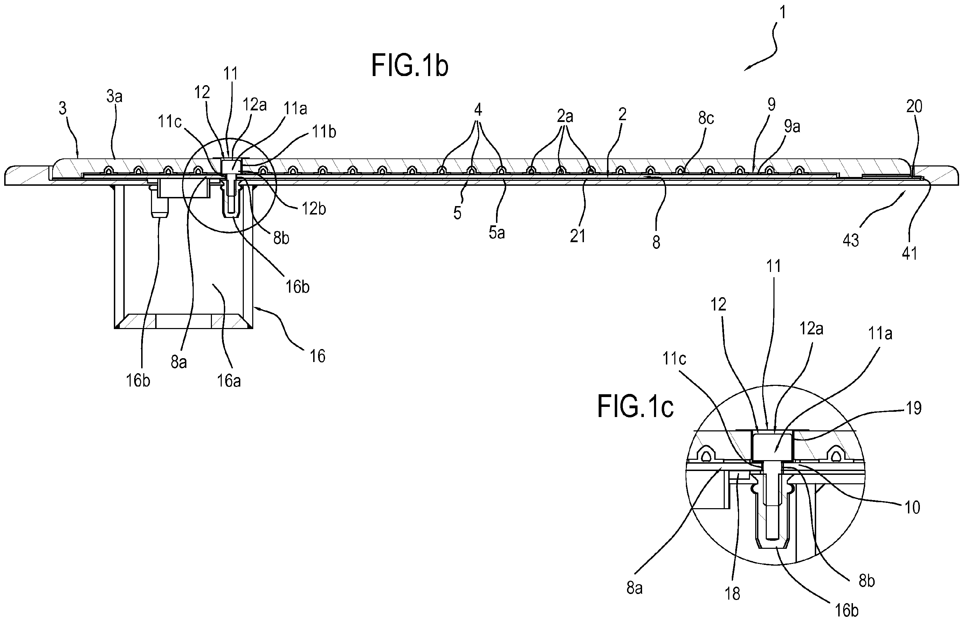

With reference to figures 1-1c, the lighting unit 2 comprises a plurality of lighting elements 2a located on the junction piece 8, each facing the inside of the socket (4) and at least partly housed in said socket (4).

Thus, the junction piece 8 is in the form of a plate wherein the lighting elements 2a are fixed/mounted or is defined by the selfsame printed circuit 5.

The lamp 1 further comprises retaining means 9 interposed between the selfsame junction piece 8 and the second face 3b of the covering element 3.

The retaining means 9 operate on the second face 3b in such a way as to connect the covering element 3 to the junction piece 8.

In other words, the retaining means 9 are of the "pulling" type, that is to say, they apply a pulling action on the second face 3b (that is, the "underside") of the covering element 3.

Thus, the retaining means 9 do not act in any way on the first face 3a of the covering element 3.

Advantageously, that way, the forces which hold the lamp 1 to the mounting surface "A" act solely on the junction piece 8 and not on the covering element 3, which remains integral with the junction piece 8 solely through the agency of the retaining means.

This configuration prevents strong local tensional stress from being created on the covering element. Advantageously, this increases the strength of the lamp 1.

Thus, the first face 3a of the covering element 3 is substantially free.

That means the whole surface of the first face 3a of the covering element 3 may be considered as "working surface". Moreover, that means the lateral surface of the covering element 3 also remains free, which allows light to be emitted in a direction parallel to the mounting surface "A" (that is, horizontally) without lateral obstructions, and yet the junction piece 8 (or support) is very easy to make.

It should be noted that the covering element 3 has a plurality of slots which are shaped to match the junction piece 8 (or plates 8) and the circuit 5 in order to facilitate its positioning.

In other words, the covering element 3 comprises spaces made both for the circuit 5 (with the LEDs) and for the system of fastening the cover to the base (junction piece 8).

In the preferred embodiment, the retaining means 9 are defined by a layer of adhesive material 9a interposed between the junction piece 8 and the second face 3b of the covering element 3.

The adhesive material is preferably an epoxy glue or the like. Advantageously, that means there are no mechanical fastening elements between the junction piece 8 and the covering element 3 which in turn means that tension between the two parts is reduced.

Moreover, the connection between covering element 3 and junction piece 8 is partly elastic, which makes it possible to control and absorb at least part of the tension without stressing the two parts (covering element 3 and junction piece 8).

Moreover, it's provided the layer of sealing material 21 distributed on a side 8c of the junction piece 8 faced away from the covering element 3. Thus, the junction piece 8 is sealed to the covering element 3.

Precisely, both the junction piece 8 and the lighting elements 2a **mounted** on the junction piece 8) are sealed to the covering element 3 by means of said layer of sealing material 21 distributed on a side 8c of the junction piece 8 faced away from the covering element 3.

In other words, both the junction piece 8 and the lighting unit 2 are interposed between the covering element 3 and the layer of sealing material 21.

Further, the junction piece 8 is integrated with the lighting unit 2, both defined by the printed circuit 5, which is provided with a lighting portion 5b comprising the plurality of lighting elements 2a and the connecting portion 5c engageable with the mounting surface "A" to fix the position of the lamp 1.

Thus, the printed circuit 5 is fixed to the covering element 3 (more specifically to its second face 3b) by the layer of adhesive material 9 and sealed thereto by the layer of sealing material 21

In detail, the printed circuit 5 has a first face 5a directed towards the second face 3b of the covering element 3 and connected thereto by the layer of adhesive material 9a. The circuit 5 also has a second face 5d (corresponding to the exposed side), opposite to the first face 5a and covered with the sealing material 21 so as to keep the lamp 1 tightly sealed.

Alternatively, the printed circuit 5 might be connected and sealed to the covering element 3 only by the layer of sealing material (external). Preferably, the lighting portion 5b is peripheral, whilst the connecting portion 5c is central (or internal).

In this case, too, the connecting portion 8a of the junction piece 8 comprises at least one stop abutment 10 which is engageable with a fastening member 11 to anchor the lamp to the mounting surface "A".

Also, the covering element 3 has a plurality of through holes 12 in it, each shaped to receive a fastening member 11 (preferably, as mentioned above, a screw). Similarly to what is stated above, the connecting portion 8a of the junction piece 8 has an opening 8b aligned with, and smaller in extension than, each of the through holes 12 in such a way as to define the stop abutment 10 for the fastening member 11 inserted in the through hole 12.

Precisely, the openings 8b has an extension (or area) less than that of the through hole 12 to which there are faced, so defining the stop abutment 10 of the junction piece 8.

In other words, the through hole 12 and the stop abutment 10 define a housing 15 for the head of the screw 11a or for the nut of the bolt (depending on the embodiment of the fastening members 11) whilst the opening 8b defines a gap for the passage of the screw thread.

That way, the shoulder of each fastening member 11 can be fastened against the stop abutment 10 of the plate 8.

Preferably, the height of the housing 15 (corresponding to the depth of the through hole or the thickness of the covering element 3) is greater than an abutment portion of the fastening member 11 housed therein (head of the screw 11a or nut).

Advantageously, that way, the fastening members 11 are hidden and embedded within the covering element 3, thus reducing the thickness of the lamp 1.

Preferably, there is also a gasket 19 pressed around the connector in order to seal it.

More preferably, said gasket is interposed between the head of the fastening member 11 and the side walls of the through hole 12 in such a way as to improve the tigthening.

In a preferred embodiment, the gasket 19 is made of the same sealing material as that used to make the sealing layer 21 for the circuit 5.

In the illustrated embodiments, the covering element 3 has a plurality of through holes 12 located in one single half-part of the lamp 1.

In the embodiment illustrated, the covering element 3 has a plurality of holes 12 located at only one half-part of the lamp.

Indeed, in this embodiment, the lamp 1 comprises at least one tongue 20 protruding laterally from the covering element 3 (on the other half-part) and irremovably connected thereto.

Preferably, the tongue 20 is made in one piece with the covering element 3, so defining a protuberance of the covering element 3.

Alternatively, the tongue 20 is defined by a thin metal plate interposed between the sealing material and the covering element 3 and protruding laterally substantially parallel to the mounting surface "A".

In this regard, the base 43 has at least one peripheral shoulder 43a provided with a respective peripheral groove which is engageable with the tongue 20 to fasten the base 43 to the covering element 3 in conjunction with the fastening member 11

Advantageously, that way, installing and fastening the lamp is quick and easy because it is sufficient to slide the tongue 20 into the groove 44 and tighten the fastening members 11 (screws) into the respective half-part.

In the embodiments illustrated in Figures from 2 to 9, the junction piece 8 is in the form of a plate separated from the lighting unit 2. More precisely, the lamp 1 comprises two junction plates 8, rounded in shape, that is to say, two discs placed in a substantially symmetrical manner along the centre line of the covering element 3.

Preferably, the plate 8 is substantially flat and is connected solely to the second face 3b of the covering element 3.

In other words, in use, the plate 8 is located under the covering element 3. Each plate 8 may be made from a metallic or plastic material or from a polymer, preferably metallic.

Preferably, also in such an embodiment, the retaining means 9 are defined by a layer of adhesive material 9a interposed between the plate 8 and the second face 3b of the covering element 3.

Advantageously, that means there are no mechanical fastening elements between the plate 8 and the covering element 3 which in turn means that tension between the two parts is reduced.

It should be noted that the covering element 3 integrated with the lighting unit 2 and with the junction plates 8 defines a single lighting element 1a of the lamp 1.

Preferably, the connecting portion 8a of the plate 8 comprises at least one **stop** abutment 10 which is engageable with a fastening member 11 to anchor the lamp 1 to the mounting surface "A".

In the simpler embodiment, the fastening member 11 is a screw 11a or a nut whose shoulder acts compressively on the **stop** abutment 10 to hold the plate 8 (and hence the lamp 1) to the mounting surface "A".

In the preferred embodiment, the covering element 3 has a plurality of through holes 12 in it, each shaped to receive a fastening member 11. Thus, each through hole 12 is substantially cylindrical in shape, to enable insertion and sliding of the screw 11a.

Further, the connecting portion 8a of the plate 8 is provided with a plurality of openings 8b, each facing (preferably aligned with) one of the through holes 12.

Preferably, also in such an embodiment, the height of the housing 15 (corresponding to the depth of the through hole or the thickness of the covering element 3) is greater than an abutment portion of the fastening member 11 housed therein (head of the screw 11a or nut). Advantageously, that way, the fastening members 11 are hidden and embedded within the covering element 3, thus reducing the thickness of the lamp 1.

With reference to figures 1-1c, preferably, the lamp 1 also comprises a base 43, interposed between the plate (or the plates) 8 and the mounting surface "A" and connectable to both.

The base 43 defines a covering element 3 support surface "B" which is preferably parallel to the mounting surface "A" of the lamp 1, but which, in some embodiments, might be inclined at a different angle.

Thus, the base 43 is preferably a flat strip (of metal/polymer or rubber) having connecting portions 13a which can be associated with the covering element 3.

Preferably, the base 43 is substantially shaped to match the perimeter of the covering element 3 and has a doubled-up outer perimeter border 43b for reinforcing its profile and protecting the lamp support.

In other words, the base 43 comprises a central plate 43c and one or more doubled-up outer perimeter borders 43b extending upwards from the central plate 43c.

Preferably, the base 43 is connected to the junction plate 8 by at least one of the fastening members 11.

Hence, the connecting portions 43a of the base 43 are defined by openings which can be engaged with the screws 11a or by screws which can be engaged with the nuts inserted in the housings 15 (defined by the through holes 12 and by the plate 8).

In other words, the base 43 has a plurality of openings which are aligned with the openings 8b of the plates 8 to allow the fastening member 11 to be inserted.

Advantageously, that way, the lighting element 1a (made up of the covering element 3 integrated with the lighting unit 2 and with the plates 8) can be mounted to the base 43 and can, if necessary, be quickly substituted during maintenance operations.

The lamp 1 comprises a tubular element 16 (or cup) extending transversely to the base 13 (and thus to the support surface "B") to define a conduit 16a for the passage of the electrical wiring (connector) between the circuit 5 and a power source.

Thus, the central plate 43c is provided with an aperture of a size such as to allow positioning of the tubular element 16.

The tubular element 16 is rigidly connected, as an example **by** welding, to the base 43. The base 43 and/or the tubular element 16 comprises at least one small threaded cylinder 16b for receiving a corresponding fastening member 11 designed to engage it.

Advantageously, the tightening of the fastening members 11 on the junction piece 8 pressed on the base allows to seal the cavity into the cylinder 16 with respect to the external environment. In this regard, it is preferably provided a gasket 18 around the opening of the passage of wires.

The base can be connected to the supporting surface by welding of the edge that seal the lower surface.

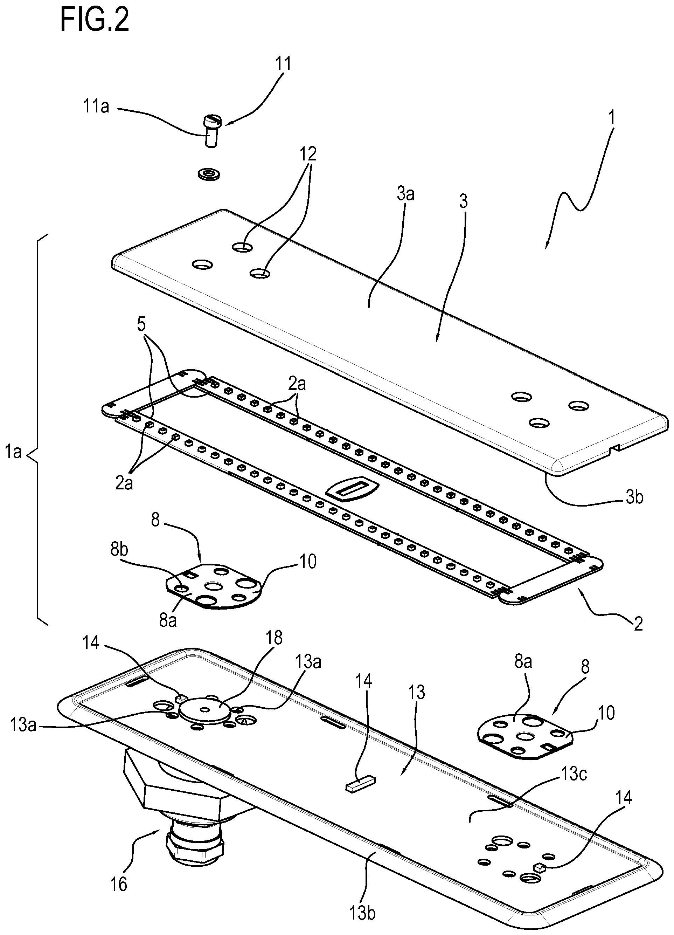

Alternatively, with reference to figures 2-6, the base 13 can also be connected to the mounting surface by suitable fastening means 17.

In this solution, the tubular element 16 (or cup) extending transversely to the base 13 (and thus to the support surface "B") to define a conduit 16a for the passage of the electrical wiring (connector) between the circuit 5 and a power source,
is rigidly connected to the central plate 13c of the base 13 (in such a way as to pass through it from side to side) by reversible connecting means such as, for example, screws, bolts or the like.

In this regard, it should be noted that the base or the tubular element (at its side walls) comprises a plurality of threaded holes for receiving the fastening members 11 (more specifically, the screws 11a).

Further, the tubular element 16 is rigidly connectable to the mounting surface "A" (in particular to the deck of a ship) either reversibly or irreversibly.

In a first embodiment, the tubular element 16 is welded to the mounting surface "A" (that is, to the deck).

In a second embodiment, the tubular element 16 is externally threaded so that it can be engaged with a matching cavity made in the mounting surface "A" (that is, in the deck).

Preferably, in this embodiment, the tubular element 16 is tightened to the mounting surface (deck) by a suitable threaded nut (not illustrated) coupled with the tubular element 16.

In this case, between the nut and the deck there is a gasket (O-ring) to prevent the passage of water from the deck. The gasket is pressed by the nut.

Obviously, all that refers to the deck of a ship might equally apply to any other installation/mounting surface of the lamp 1.

In alternative embodiments, the base has different forms.

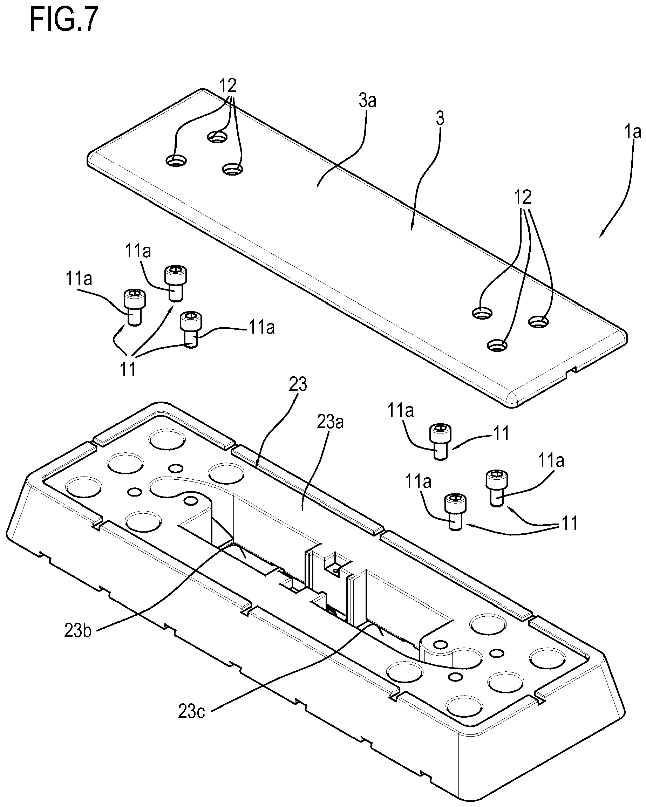

In a first alternative embodiment (Figure 7), the base 23 is a block (made preferably of rubber) provided with at least one central compartment 23b, and where the central plate 23a defines a support plane above the selfsame compartment 23b.

Preferably, the central plate 23a is equipped with at least one slot 23c defining an aperture through which the support surface "B" can pass to allow the passage of the electrical wiring.

The receiving compartment which, in use, lies under the lighting element 1a, is shaped in such a way as to accommodate the electrical wiring box.

It should be noted that in this embodiment, it might not be necessary to make holes in the mounting surface "A" for the passage of wiring. In the case of wiring under the surface, the hole to be made is limited to that strictly necessary for the passage of the wiring

It should be noted that the base 23 might be provided with a peripheral groove (not illustrated) which is engageable with the tongue 20 of the lamp illustrated in Figures 1-1c, in such a way as to fasten the base 23 to the covering element 3 in conjunction with the fastening member 11.

In a second alternative embodiment, the base 33 is provided with two lateral longitudinal compartments 33a for the wiring and with a box 33b for the wiring connections

Preferably, the base 33 houses two lighting elements 3.

In this embodiment, the power supply wiring does not pass through the support surface "B" of the base 33, but exits the covering element 3 through the lateral edge to connect to the aforementioned box.

Thus, the base 33 defines a linear rail where the wiring connects along the surface the lighting elements 1a arranged in series.

To minimize the need for holes on the surface, the holes 12 and the fastening members 11 secure the element 3 to the mounting surface "A" and, indirectly, also to the support surface "B" (that is, the central plate 33a of the base 33)

Advantageously, this embodiment is not invasive on the mounting surface and lamp installation is therefore less critical for the mounting structure (for example, the deck of a ship).

It should be noted that in this case, too, the base 33 might be provided with a peripheral groove (not illustrated) which is engageable with the tongue 20 of the lamp illustrated in Figures 1-1b, in such a way as to fasten the base 33 to the covering element 3 in conjunction with the fastening member 11.

The invention achieves the proposed aims and brings important advantages.

Indeed, the presence of a substantially full and slotted covering element to house the lighting unit makes it possible to obtain an extremely low profile although the lamp is entirely above the mounting surface.

What is more, the limited thickness makes it possible to obtain a mechanically flexible lamp which can adapt to deformation of the deck without high stresses.

Further, the connection to the mounting surface through the tubular element or the like does not require large openings to be made in the mounting surface but only one or more holes to accommodate the cup. The support plate (junction piece) allows to connect the lamp avoiding the high stresses of the fastening members on the transparent covering element and, at the same time, to seal the tubular memer for the wire connection.

The use of sealing material, in particular in the embodiment where the lighting unit is embedded, allows the lighting element to be sealed without openings and gaskets, while at the same time allowing quick and easy substitution.

Advantageously, the presence of a lighting element which is removably connected to the base enables the lamp to be substituted without opening it (and thus without exposing the LEDs).

Thanks to the absence of opaque elements round the edge of the covering element, the lamp emits sidelight along the mounting surface and this, in these applications, is of considerable importance.

## Claims

1. A surface mounting lamp, comprising:
- a covering element (3) made of a transparent material and having a first face (3a), which in use is directed outwards away from a mounting surface (A) of the lamp, and a second face (3b) opposite the first face (3a) and provided with at least one socket (4);
- at least one junction piece (8) connected and sealed to the covering element (3) and equipped with a connecting portion (8a) which
can be **anchored to** the mounting surface (A) of the lamp and **comprises** at least one stop abutment (10) which is engageable with a fastening member (11) to anchor the lamp to the mounting surface (A);
**characterized in that it comprises:**
- at least one lighting unit (2) equipped with a plurality of lighting elements (2a); **said lighting unit (2) being** located **above** said junction piece (8), **with** each **lighting element (2a)** facing the inside of the at least one socket (4) and at least partly housed in said at least one socket (4);
- a layer of adhesive material (9a) interposed between the junction piece (8) and the second face (3b) of the covering element (3) holding the covering element (3) on the junction piece (8), in order to reduce the mechanical stress on the covering element (3).

2. The lamp according to claim 1, **characterized in that** the junction piece (8) and the lighting unit (2) are sealed to the covering element (3) by a layer of sealing material (6,21) spread on one side (8b) of the junction piece (8) directed towards the outside of the covering element (3) in such a way as to keep the lamp tightly sealed.

3. The lamp according to claim 2, **characterized in that** the lighting unit (2) and the junction piece (8) are defined by at least one printed circuit (5) which is provided with a lighting portion (5b) comprising said plurality of lighting elements (2a) and a connecting portion (5c) corresponding to the connecting portion (8a) of the junction piece (8) and to be anchored to the mounting surface (A) to fix the position of the lamp.

4. The lamp according to claim 3, **characterized in that** the printed circuit (5) has a first face (5a) directed towards the second face (3b) of the covering element (3) and connected thereto by said layer of adhesive material (9a), and a second face (5d) opposite to the first face (5a) and covered with the sealing material (21) so as to keep the lamp tightly sealed.

5. The lamp according to any of the preceding claims, **characterized in that** it comprises a base (13, 23, 33, 43) rigidly connectable to the mounting surface (A) and at least partly connected to the junction piece (8) by the fastening member (11) in order to define a support surface (B) for the covering element (3); said lamp further comprising:
- a tubular element (16) connected rigidly to the base (13, 23, 33, 43) and extending transversely thereto to define a conduit (16a) for the passage of the electrical wiring between the lighting unit (2) and a power source;
- a gasket (18) operatively interposed between the junction piece (8) and the tubular element (16) in order to seal the connection by said fastening member (11).

6. The lamp according to claim 5, **characterized in that** the base (43) and/or the tubular element (16) comprises at least one small threaded cylinder (16b) for receiving said fastening member (11) designed to engage it.

7. The lamp according any of the preceding claims, **characterized in that** the covering element (3) is equipped with a plurality of through holes (12) each shaped to allow insertion of the fastening member (11); the connecting portion (8a) of the junction piece (8) being provided with a plurality of openings (8b) each aligned with a respective through hole (12) and smaller in extension than the latter, thus defining the stop abutment (10) for the fastening member (11) inserted in the respective through hole (12).

8. The lamp according to claim 7, **characterized in that** each fastening member (11) is defined by a screw (11a) or nut which can be tightened in abutment against the stop abutment (10) of the junction piece (8).

9. The lamp according to any of the preceding claims, **characterized in that** the lighting unit (2) is embedded in the covering element (3).

10. The lamp according to any of the preceding claims, **characterized in that** it comprises a tongue (20) protruding laterally from the covering element (3) and irremovably connected thereto; the base (43) having at least one peripheral shoulder (43a) provided with a respective peripheral groove (44) which is engageable with the tongue (20) to fasten the base (43) to the covering element (3) in conjunction with the fastening member (11).

11. The lamp according to any of the preceding claims, **characterized in that** the lighting elements (2a) are LEDS.

## Patentansprüche

1. Oberflächenmontierte Lampe, umfassend:
- ein Abdeckelement (3), das aus einem durchsichtigen Werkstoff hergestellt ist und eine erste Fläche (3a) aufweist, die im Gebrauch nach außen, weg von einer Montageoberfläche (A) der Lampe ausgerichtet ist, und eine zweite Fläche (3b), die der ersten Fläche (3a) gegenüberliegt und zumindest einen Sockel (4) aufweist;
- zumindest ein Verbindungsstück (8), das mit dem Abdeckelement (3) verbunden und daran angesiegelt ist und das einen Verbindungsabschnitt (8a) aufweist, der an der Montageoberfläche (A) der Lampe verankert werden kann und zumindest einen Stoppanschlag (10) umfasst, der mit einem Befestigungsorgan (11) in Eingriff gelangen kann, um die Lampe an der Montageoberfläche (A) zu verankern;
**dadurch gekennzeichnet, dass** sie umfasst:
- zumindest eine Beleuchtungseinheit (2), ausgestattet mit einer Vielzahl von Leuchtelementen (2a); wobei die Beleuchtungseinheit (2) über dem Verbindungsstück (8) angeordnet ist, wobei jedes Leuchtelement (2a) der Innenseite des zumindest einen Sockels (4) zugewandt und zumindest teilweise in dem zumindest einen Sockel (4) untergebracht ist;
- eine Schicht Klebematerial (9a), die zwischen dem Verbindungsstück (8) und der zweiten Fläche (3b) des Abdeckelements (3) angeordnet ist und das Abdeckelement (3) auf dem Verbindungsstück (8) hält, um die auf das Abdeckelement (3) wirkende mechanische Belastung zu verringern.

2. Lampe nach Anspruch 1, **dadurch gekennzeichnet, dass** das Verbindungsstück (8) und die Beleuchtungseinheit (2) durch eine Schicht aus Versiegelungsmaterial (6, 21) an das Abdeckelement (3) gesiegelt sind, die auf einer Seite (8b) des Verbindungsstücks (8) aufgetragen ist, die zur Außenseite des Abdeckelements (3) hin gerichtet ist, um die Lampe gut abgedichtet zu halten.

3. Lampe nach Anspruch 2, **dadurch gekennzeichnet, dass** die Beleuchtungseinheit (2) und das Verbindungsstück (8) durch zumindest eine gedruckte Schaltung (5) definiert sind, die einen Leuchtabschnitt (5b) aufweist, der die Vielzahl von Leuchtelementen (2a) und einen Verbindungsabschnitt (5c) umfasst, der dem Verbindungsabschnitt (8a) des Verbindungsstücks (8) entspricht und an der Montageoberfläche (A) zu verankern ist, um die Position der Lampe zu fixieren.

4. Lampe nach Anspruch 3, **dadurch gekennzeichnet, dass** die gedruckte Schaltung (5) eine erste Fläche (5a) aufweist, die der zweiten Fläche (3b) des Abdeckelements (3) zugewandt ist und durch die Schicht aus Klebematerial (9a) damit verbunden ist, und eine zweite Fläche (5d) aufweist, die der ersten Fläche (5a) gegenüberliegt und mit dem Versiegelungsmaterial (21) überzogen ist, um die Lampe gut abgedichtet zu halten.

5. Lampe nach einem der vorhergehenden Ansprüche, **dadurch gekennzeichnet, dass** sie eine Basis (13, 23, 33, 43) umfasst, die starr mit der Montageoberfläche (A) verbunden werden kann und durch das Befestigungsorgan (11) zumindest teilweise mit dem Verbindungsstück (8) verbunden ist, um eine Auflagefläche (B) für das Abdeckelement (3) zu definieren; wobei die Lampe ferner umfasst:
- ein röhrenförmiges Element (16), das starr mit der Basis (13, 23, 33, 43) verbunden ist und sich quergerichtet dazu erstreckt, um eine Leitung (16a) zum Durchführen der elektrischen Verdrahtung zwischen der Beleuchtungseinheit (2) und einer Energiequelle zu definieren;
- eine Dichtung (18), die funktionsmäßig zwischen dem Verbindungsstück (8) und dem röhrenförmigen Element (16) angeordnet ist, um die Verbindung durch das Befestigungsorgan (11) abzudichten.

6. Lampe nach Anspruch 5, **dadurch gekennzeichnet, dass** die Basis (43) und/oder das röhrenförmige Element (16) zumindest einen kleinen Gewindezylinder (16b) umfasst, um das Befestigungsorgan (11) aufzunehmen, das für den Eingriff damit bestimmt ist.

7. Lampe nach einem der vorhergehenden Ansprüche, **dadurch gekennzeichnet, dass** das Abdeckelement (3) eine Vielzahl von Durchgangslöchern (12) aufweist, die jeweils so geformt sind, dass sie das Einführen des Befestigungsorgans (11) ermöglichen; wobei der Verbindungsabschnitt (8a) des Verbindungsstücks (8) eine Vielzahl von Öffnungen (8b) aufweist, die jeweils mit einem entsprechenden Durchgangsloch (12) fluchtend ausgerichtet und kleiner als dieses sind, um somit den Stoppanschlag (10) für das Befestigungsorgan (11) zu definieren, das in das entsprechende Durchgangsloch (12) eingeführt ist.

8. Lampe nach Anspruch 7, **dadurch gekennzeichnet, dass** jedes Befestigungsorgan (11) durch eine Schraube (11a) oder Mutter definiert ist, die auf Anschlag gegen den Stoppanschlag (10) des Verbindungsstücks (8) fest angezogen werden kann.

9. Lampe nach einem der vorhergehenden Ansprüche, **dadurch gekennzeichnet, dass** die Beleuchtungseinheit (2) in das Abdeckelement (3) eingebettet ist.

10. Lampe nach einem der vorhergehenden Ansprüche, **dadurch gekennzeichnet, dass** sie eine Zunge (20) umfasst, die seitlich über das Abdeckelement (3) hervorragt und unabnehmbar damit verbunden ist; wobei die Basis (43) zumindest eine umlaufende Schulter (43a) aufweist, die mit einer entsprechenden umlaufenden Rille (44) versehen ist, die mit der Zunge (20) in Eingriff gelangen kann, um die Basis (43) an dem Abdeckelement (3) in Verbindung mit dem Befestigungsorgan (11) zu befestigen.

11. Lampe nach einem der vorhergehenden Ansprüche, **dadurch gekennzeichnet, dass** die Leuchtelemente (2a) LEDs sind.

## Revendications

1. Une lampe à montage en surface, comprenant :
- un élément de couverture (3) réalisé dans un matériau transparent et ayant une première face (3a), qui en utilisation est orientée vers l'extérieur à l'opposé d'une surface de montage (A) de la lampe, et une deuxième face (3b) opposée à la première face (3a) et munie d'au moins une douille (4) ;
- au moins une pièce de jonction (8) raccordée et scellée à l'élément de couverture (3) et munie d'une portion de raccordement (8a) qui peut être ancrée à la surface de montage (A) de la lampe et comprend au moins une butée d'arrêt (10) qui peut être assujettie avec un organe de serrage (11) pour ancrer la lampe à la surface de montage (A) ;
**caractérisée en ce qu'**elle comprend :
- au moins un groupe d'éclairage (2) muni d'une pluralité d'éléments d'éclairage (2a) ; ledit groupe d'éclairage (2) étant situé au-dessus de ladite pièce de jonction (8), avec chaque élément d'éclairage (2a) faisant face à l'intérieur de ladite au moins une douille (4) et au moins partiellement logé dans ladite au moins une douille (4) ;
- une couche de matériau adhésif (9a) interposée entre la pièce de jonction (8) et la deuxième face (3b) de l'élément de couverture (3) maintenant l'élément de couverture (3) sur la pièce de jonction (8), de manière à réduire la sollicitation mécanique sur l'élément de couverture (3).

2. La lampe selon la revendication 1, **caractérisée en ce que** la pièce de jonction (8) et le groupe d'éclairage (2) sont scellés à l'élément de couverture (3) par une couche de matériau d'étanchéité (6, 21) appliquée sur un côté (8b) de la pièce de jonction (8) orienté vers l'extérieur de l'élément de couverture (3) de manière à maintenir la lampe bien étanche.

3. La lampe selon la revendication 2, **caractérisée en ce que** le groupe d'éclairage (2) et la pièce de jonction (8) sont définis par au moins un circuit imprimé (5) qui est muni d'une portion d'éclairage (5b) comprenant ladite pluralité d'éléments d'éclairage (2a) et d'une portion de raccordement (5c) correspondant à la portion de raccordement (8a) de la pièce de jonction (8) et à ancrer à la surface de montage (A) pour bloquer la position de la lampe.

4. La lampe selon la revendication 3, **caractérisée en ce que** le circuit imprimé (5) a une première face (5a) orientée vers la deuxième face (3b) de l'élément de couverture (3) et raccordée à celle-ci par le biais de la couche de matériau adhésif (9a), et une deuxième face (5d) opposée à la première face (5a) et recouverte avec le matériau d'étanchéité (21) de manière à maintenir la lampe bien étanche.

5. La lampe selon l'une quelconque des revendications précédentes, **caractérisée en ce qu'**elle comprend une base (13, 23, 33, 43) pouvant être raccordée de façon rigide à la surface de montage (A) et au moins partiellement raccordée à la pièce de jonction (8) par le biais de l'organe de serrage (11) de manière à définir une surface de support (B) pour l'élément de couverture (3) ; ladite lampe comprenant également :
- un élément tubulaire (16) raccordé de façon rigide à la base (13, 23, 33, 43) et s'étendant transversalement à celle-ci pour définir un conduit (16a) pour le passage du câblage électrique entre le groupe d'éclairage (2) et une source d'énergie ;
- un joint (18) interposé opérationnellement entre la pièce de jonction (8) et l'élément tubulaire (16) de manière à sceller le raccordement au moyen dudit organe de serrage (11).

6. La lampe selon la revendication 5, **caractérisée en ce que** la base (43) et/ou l'élément tubulaire (16) comprend au moins un petit cylindre fileté (16b) pour recevoir ledit organe de serrage (11) destiné à l'assujettir.

7. La lampe selon l'une quelconque des revendications précédentes, **caractérisée en ce que** l'élément de couverture (3) est muni d'une pluralité de trous traversants (12) conformés, chacun, pour permettre l'introduction de l'organe de serrage (11) ; la portion de raccordement (8a) de la pièce de jonction (8) étant munie d'une pluralité d'ouvertures (8b), chacune alignée avec un trou traversant (12) respectif et plus petite en extension que ce dernier, définissant ainsi la butée d'arrêt (10) pour l'organe de serrage (11) introduit dans le trou traversant (12) respectif.

8. La lampe selon la revendication 7, **caractérisée en ce que** chaque organe de serrage (11) est défini par une vis (11a) ou écrou qui peut être serré(e) en butée contre la butée d'arrêt (10) de la pièce de jonction (8).

9. La lampe selon l'une quelconque des revendications précédentes, **caractérisée en ce que** le groupe d'éclairage (2) est imbriqué dans l'élément de couverture (3).

10. La lampe selon l'une quelconque des revendications précédentes, **caractérisée en ce qu'**elle comprend une languette (20) dépassant latéralement de l'élément de couverture (3) et raccordée à celui-ci de façon inamovible ; la base (43) ayant au moins un épaulement périmétrique (43a) muni d'une rainure périmétrique (44) respective qui peut être assujettie avec la languette (20) pour fixer la base (43) à l'élément de couverture (3) en association avec l'organe de serrage (11).

11. La lampe selon l'une quelconque des revendications précédentes, **caractérisée en ce que** les éléments d'éclairage (2a) sont des DEL.
